# EUROPEAN PATENT APPLICATION

(11) **EP 2 546 888 A2**
(43) Date of publication of application: **16.01.2013**
(21) Application number: 10847549.2
(22) Date of filing: 10.09.2010
(51) Int. Cl.: H01L 31/048

(54) **JUNCTION BOX FOR SOLAR CELL MODULE**

(30) Priority: 11.03.2010 KR 20100021758
(71) Applicant: Ds Solar Energy Co. Ltd., Gyeonggi-do 445-932 (KR)
(72) Inventor: JANG, Hyung Suk, Chungcheongnam-do, 336-744 (KR)
(74) Representative: Koepe & Partner
(86) International application number: PCT/KR2010/006155
(87) International publication number: WO 2011/111915

(57) **Abstract**

A solar cell module junction box includes a plurality of terminals (30) respectively connected to solar cells, a housing (10) one-piece formed with the terminals (30), a cover (50) coupled to an upper portion of the housing (10) to close the housing (10), a pair of cable members (60) respectively connected to the terminals (30) spaced apart from each other along a transverse direction of the housing (10), a flat diode (20) arranged between the terminals (30) and configured to cause an electric current to bypass a damaged solar cell, and a plurality of heat sinks (25) arranged at the rear side of the diode (20) to dissipate heat generated in the diode (20) or a heat diffusion member (29) made of an insulating heat diffusion material (29a) alone or formed by covering a heat diffusion pad (29b) with the insulating heat diffusion material (29a).

## Description

### Field of the Invention

The present invention relates to a solar cell module junction box for receiving electric energy generated in a multiplicity of solar cells and delivering the electric energy to an inverter or a battery. More particularly, the present invention pertains to solar cell module junction box that, when bypassing a damaged solar cell through the use of a diode, can rapidly dissipate heat generated in the diode, thereby maintaining the performance of the diode and prolonging the lifespan of the diode and the solar cell module.

### Background of the Invention

In general, a solar cell module includes a plurality of cell panels in which solar cells are arranged. The solar cells of each of the cell panels are connected in series or in parallel. The cell panels are serially connected to one another, eventually forming a solar cell module.

In a conventional solar cell module, it is sometimes the case that power generation is stopped due to a variety of causes. For example, solar cells may be damaged by excrement of birds. Power generation may be hindered by shadows.

If the solar cells of a cell panel is damaged or if the power generation is stopped, the overall power generation capacity grows smaller. Moreover, the electric current generated in a normal cell panel may reversely flow toward a damaged cell panel, which may result in stoppage of power generation.

In order to avoid such a situation, a bypass diode interconnecting the solar cells to form an electric circuit and bypassing a damaged or disconnected solar cell is employed in a junction box for receiving electric energy generated in a multiplicity of solar cells and delivering the electric energy to an inverter or a battery. If one or more of the solar cells is damaged or disconnected, the bypass diode bypasses the damaged or disconnected solar cell, thereby preventing stoppage of power generation.

If an electric current flows around the damaged or disconnected solar cell, the bypass diode delivers a large amount of electric power, some of which is converted to thermal energy. It is therefore necessary to rapidly dissipate heat generated in the bypass diode.

However, the conventional bypass diode cannot easily dissipate heat because it has a cylindrical shape or a dumbbell-like shape. This leads to a reduction in the diode performance, the power generation capacity and the power output and shortens the lifespan of the bypass diode and the solar cell module.

In other words, the conventional solar cell module junction box employs a bypass circuit ensuring that an electric current does not pass through a damaged or disconnected solar cell. However, the conventional solar cell module junction box is not capable of rapidly dissipating heat generated in the bypass diode because the bypass diode has a cylindrical shape or a dumbbell-like shape. This leads to a reduction in the diode performance, the power generation capacity and the power output and shortens the lifespan of the bypass diode and the solar cell module.

In the conventional solar cell module junction box, a circuit is formed by connecting individual terminals through different parts. This increases the contact resistance and reduces the efficiency of the solar cell module. Moreover, the conventional solar cell module suffers from a problem in that the output becomes unstable due to the poor contact between a ribbon wire and a terminal. In addition, the conventional solar cell module has such a structure that, when assembling the solar cell module, the end portion of a cable wire is just inserted into a clip spring. This poses a problem in that the contact between the cable wire and the clip spring is unstable and the voltage is dropped due to the poor contact caused by humidity, vibration or rust.

### Summary of the Invention

In view of the aforementioned problems, it is an object of the present invention to provide a solar cell module junction box capable of rapidly dissipating heat generated in a diode.

Another object of the present invention is to provide a solar cell module junction box capable of preventing reduction in the performance of a diode and in the output of a solar cell module and capable of enhancing the durability of the diode and the solar cell module.

A further object of the present invention is to provide a solar cell module junction box capable of significantly reducing the contact resistance between different parts and capable maximizing the efficiency of a solar cell module.

A still further object of the present invention is to provide a solar cell module junction box capable of preventing instability in the output which may be caused by poor contact between individual parts.

In accordance with one aspect of the present invention, there is provided a solar cell module junction box, including: a plurality of terminals respectively connected to solar cells; a housing one-piece formed with the terminals; a cover coupled to an upper portion of the housing to close the housing; a pair of cable members respectively connected to the terminals spaced apart from each other along a transverse direction of the housing; a flat diode arranged between the terminals and configured to cause an electric current to bypass a damaged solar cell; and a plurality of heat sinks arranged at the rear side of the diode to dissipate heat generated in the diode or a heat diffusion member made of an insulating heat diffusion material alone or formed by covering a heat diffusion pad with the insulating heat diffusion material, each of the terminals including a tip end portion to which a ribbon wire of each of the solar cells is connected and a fixing member having a clip arranged in the tip end portion, the clip including a clip lug rotatably fitted to a pivot hole of the fixing member and a clip hook formed at a tip end of the clip and locked to a clip locking portion of the fixing member, the clip configured to fix the ribbon wire interposed between the tip end portion of each of the terminals and the clip.

The diode may be soldered to the housing or fastened to the housing by a screw, the heat sinks fastened to rear surfaces of the terminals by screws and isolated from each other by a partition wall existing between the heat sinks.

The heat diffusion member may be installed on upper or lower surfaces of rear end portions of the terminals to interconnect the rear end portions of the terminals, the heat diffusion member configured to enable the terminals to dissipate heat generated in the diode.

Each of the cable members may include a cable wire inserted into an insertion portion formed at the rear side of each of the terminals, the insertion portion crushed to fix the cable wire in place.

The diode may include two forwardly-protruding connector pins respectively connected to the terminals, the connector pins press-fitted to grooves of connector pieces bent upward from side portions of the terminals, the connector pins spot-welded or soldered to the connector pieces.

Each of the terminals may include a plurality of embossments protruding from the tip end portion and a spring holder provided with a contact spring making contact with the embossments, the spring holder rotatably coupled to a hinge shaft provided in the housing and locked to a fastener member provided in the housing such that the ribbon wire is fixed between the embossments and the contact spring.

Each of the terminals may include a plating layer made of silver or tin and formed on the tip end portion of each of the terminals to reduce a contact resistance between the tip end portion and the ribbon wire, the plating layer formed at such a width as to cover the embossments.

The plating layer may contain gold so as to prevent rust generation or oxidation in each of the terminals making contact with the ribbon wire.

The housing may has a bottom surface region opened such that the rear portions of the terminals and the heat sinks are exposed to the outside, each of the terminals having a plurality of heat radiating holes.

A heat transfer pad or heat transfer grease may exist between the terminals, the diode and the heat sinks.

Each of the cable members may include a cable wire having an end portion inserted into an insertion portion formed in the rear portion of each of the terminals and pressed against each of the terminals, a wire nut fastened to each of cable insertion portions spaced apart from each other in a transverse direction of the housing, a wire seal interposed between each of the cable insertion portions and the wire nut, and a wire seal holder formed in each of the cable insertion portions to hold the wire seal, each of the cable members configured such that the wire seals fitted to the wire seal holders are contracted and the cable wires are compressed when the wire nuts are tightened in a state that the cable wires are inserted into the cable insertion portions.

In the solar cell module junction box of the present invention, the diode having a flat shape is used and the heat generated in the diode is dissipated through a terminal, a heat sink or a heat transfer pad. It is therefore possible to maintain the diode performance for a long period of time and to enhance the durability of the diode and the solar cell module.

The cable wire and the terminal are directly connected to each other in a state that the end portion of the cable wire is surrounded and compressed by the reception portion of the terminal. This eliminates the problem of voltage drop and improves the product quality. The manufacturing process of the junction box is simplified because there is no need to use additional parts or to install a clip spring.

A plurality of terminals is formed into a single component. Therefore, as compared with a case where a circuit is formed by connecting different parts, it is possible to significantly reduce the contact resistance between different parts and to maximize the efficiency of the solar cell module.

The wire seal fitted to the wire seal holder shrinks and compresses the cable when assembling the cable member. This makes it possible to prevent water or contaminants from infiltrating into the cable insertion region. This also makes it possible to use cables differing in thickness.

The connector pins of the diode are spot-welded or soldered to the connector pieces of the terminal. This makes it possible to ensure reliable contact between the terminal and the diode.

The contact performance of the ribbon wire is improved by the embossments formed in the tip end portion of the terminal to which the ribbon wire is connected and by the shape of the contact spring. Since the spring holder for holding the contact spring is locked to the fixing member, it is possible to firmly fasten the ribbon wire.

Inasmuch as the rear bottom surface of the housing having the heat sink gets opened, it is possible to significantly increase the heat radiating efficiency of the heat sink.

Owing to the fact that the heat transfer pad or the heat transfer grease exists between the terminal and the heat sink and between the diode and the heat sink, the heat generated in the diode can be effectively dissipated by the terminal, the heat sink or the insulating heat diffusion member.

### Brief Description of the Drawings

Fig. 1 is an exploded perspective view showing a solar cell module junction box according to one embodiment of the present invention.

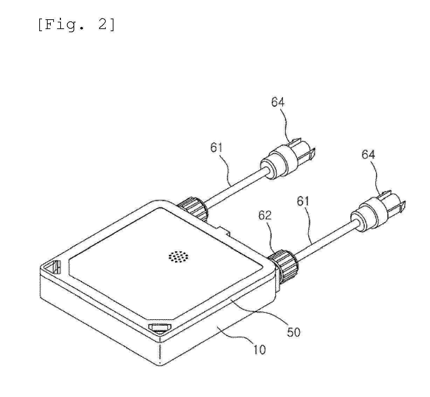

Fig. 2 is an external perspective view of the solar cell module junction box.

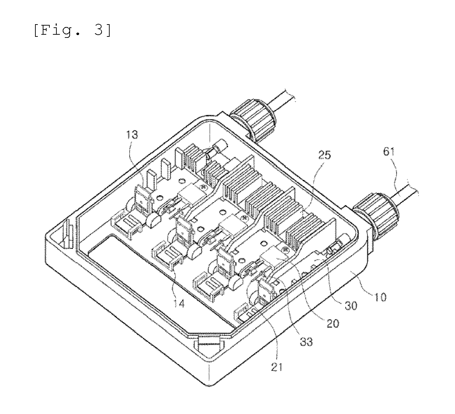

Fig. 3 is an internal perspective view of the solar cell module junction box.

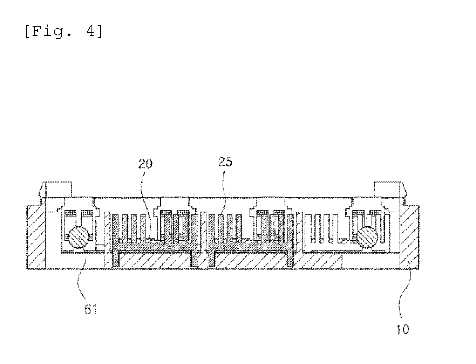

Fig. 4 is a section view showing a heat sink installation portion as a major portion of the solar cell module junction box.
Fig. 5 is a perspective view showing a diode connection portion as a major portion of the solar cell module junction box.
Fig. 6 is a perspective view showing a cable wire connection portion as a major portion of the solar cell module junction box.
Fig. 7 is an operation view showing one example of a ribbon wire fastening portion as a major portion of the solar cell module junction box.
Fig. 8 is an operation view showing another example of a ribbon wire fastening portion as a major portion of the solar cell module junction box.
Fig. 9 is a bottom perspective view showing the heat sink installation portion as a major portion of the solar cell module junction box.

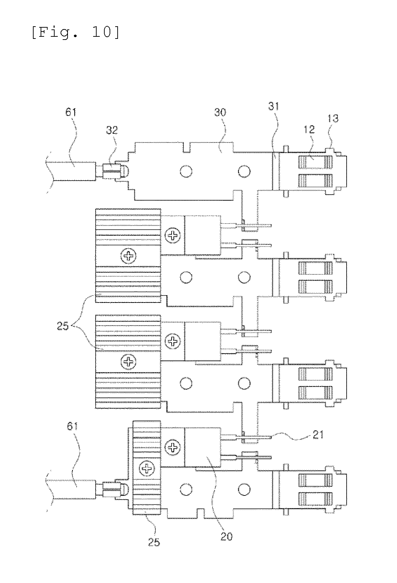

Fig. 10 is a plan view showing a terminal as a major portion of the solar cell module junction box and a peripheral configuration of the terminal.
Fig. 12 is a reference view showing another installation example of the diode and the heat sink as major portions of the solar cell module junction box.
Fig. 13 is a reference view showing an insulating heat diffusion member as a major portion of the solar cell module junction box.

### Detailed Description of the Preferred Embodiments

One preferred embodiments of a solar cell module junction box according to the present invention will now be described in detail with reference to the accompanying drawings.

The solar cell module junction box according to one embodiment of the present invention includes: a plurality of terminals 30 respectively connected to solar cells (not shown); a housing 10 one-piece formed with the terminals 30; a cover 50 coupled to an upper portion of the housing 10 to close the housing 10; a pair of cable members 60 respectively connected to the terminals 30 spaced apart from each other along a transverse direction of the housing 10; a plurality of flat diodes 20 arranged between the terminals 30 and configured to cause an electric current to bypass a damaged solar cell; a plurality of heat sinks 25 respectively arranged at the rear sides of the diodes 20 to dissipate heat generated in the diodes 20; and a water-proof dehumidifying means 40 arranged on a side wall of the cover 50 or the housing 10 to discharge heat and humidity generated within the housing 10.

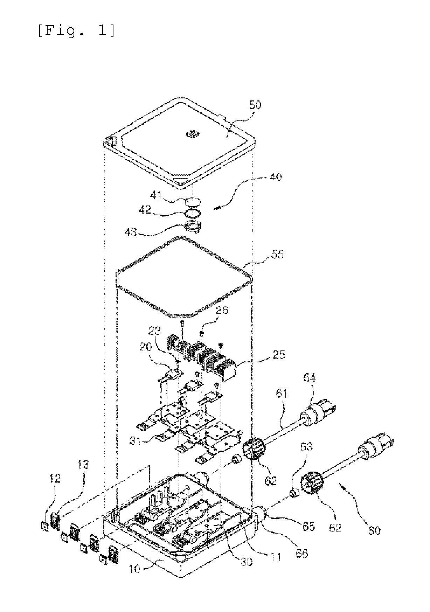

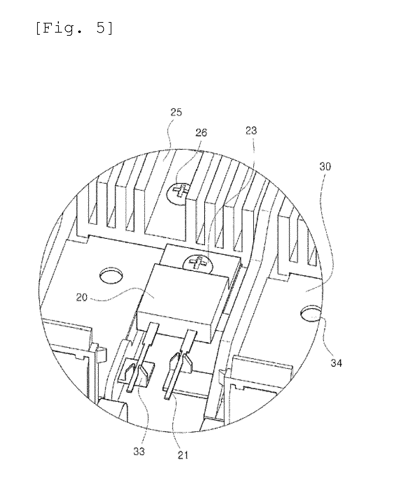

As shown in Fig. 5, each of the diodes 20 is fixed to the housing 10 by means of a screw 23. Each of the heat sinks 25 is fastened and fixed to the rear surface of each of the terminals 30 by means of a screw 26. A partition wall 11 may be formed between the heat sinks 25 (see Fig. 1).

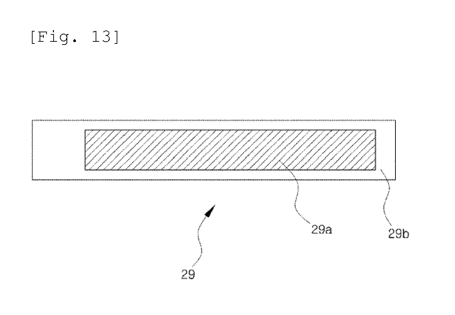

Instead of the heat sinks 25, an insulating heat diffusion member 29 may be installed in the positions where the heat sinks 25 are to be arranged. As shown in Fig. 13, the heat diffusion member 29 may be made of an insulating heat diffusion material 29a alone or may be formed by covering a heat diffusion pad 29b with the insulating heat diffusion material 29a.

Preferably, the heat diffusion member 29 is arranged on the upper surface or the lower surface of the rear end portions of the terminals 30. The heat diffusion member 29 has a specified width and thickness and serves to interconnect the rear end portions of the terminals 30 so that the heat generated in the diodes 20 can be dissipated by the terminals 30. The insulating heat diffusion material 29a is a metal plate covered with an insulating film. A silver plate, a copper plate or an aluminum plate can be used as the metal plate.

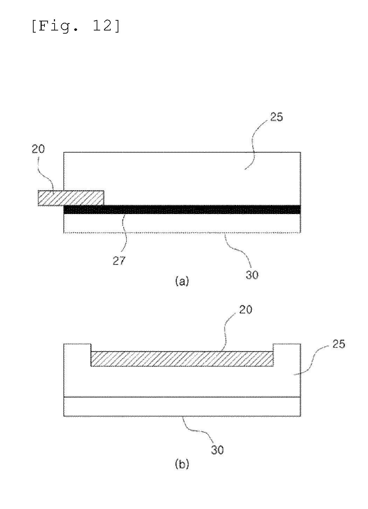

As shown in Fig. 12A, the heat sinks 25 are installed on the upper surfaces of the terminals 30 so as to partially cover the diodes 20. Reference numeral 27 designates a heat radiating band. As shown in Fig. 12B, the diodes 20 may be positioned above the heat sinks 25 installed on the upper surface of the terminals 30. In this case, a heat transfer pad or heat transfer grease may preferably be arranged between the terminals 30, the diodes 20 and the heat sinks 25.

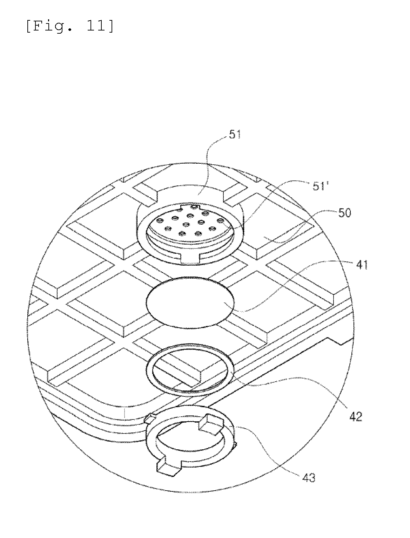

Referring to Fig. 11, the water-proof dehumidifying means 40 includes a membrane 41 made of a humidity-transmitting water-proof material and a holder 43 for holding the membrane 41. The holder 43 is coupled through a seal member 42 to an installation portion 51 formed on the upper surface or the lower surface of the cover 50 or on the sidewall of the housing 10. The membrane 41 may be fusion-bonded or spot-welded to the installation portion 51 formed on the upper surface or the lower surface of the cover 50 or to the sidewall of the housing 10.

The humidity generated within the housing 10 is discharged through the membrane 41. Therefore, the interior of the housing 10 can always be kept dry.

As shown in Fig. 1, each of the cable members 60 includes a cable wire 61 having an end portion inserted into an insertion portion 32 formed in the rear portion of each of the terminals 30 and pressed against each of the terminals 30, a wire nut 62 fastened to each of cable insertion portions 66 spaced apart from each other in a transverse direction of the housing 10, a wire seal 63 interposed between each of the cable insertion portions 66 and the wire nut 62, and a wire seal holder 65 formed in each of the cable insertion portions 66 to hold the wire seal 63. The cable wire 61 is provided at the other end with a connector 64.

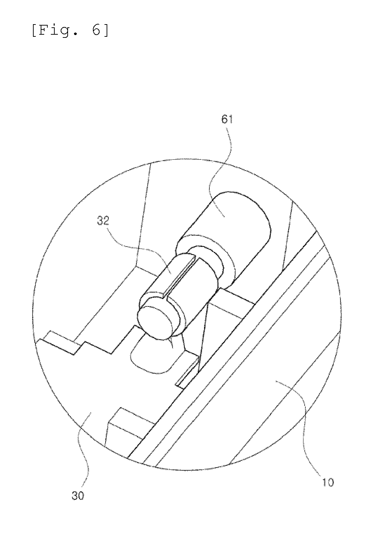

As shown in Fig. 6 on an enlarged scale, the cable wire 61 is inserted into the insertion portion 32 arranged at the rear side of each of the terminals 30. Then, the insertion portion 32 surrounding the end portion of the cable wire 61 is crushed to thereby fix the cable wire 61 in place.

This helps eliminate the problem of unstable contact which may occur when the end portion of a cable wire is inserted into and fixed to a clip spring in a conventional manner. If the cable wire 61 and the terminal 30 are directly connected to each other as in the present invention, it is possible to avoid the voltage drop and to improve the product quality. Since there is no need to employ a clip spring, it is possible to simplify the manufacturing process of the solar cell module junction box.

In the conventional junction box, the end portion of a cable wire is just inserted into a clip spring. As a result, the contact between the cable wire and the clip spring is unstable. Also, poor contact may occur due to humidity, vibration, rust or oxidation. This leads to voltage drop and reduction in the product quality.

Referring to Fig. 5, each of the diodes 20 includes two forwardly-protruding connector pins 21 respectively connected to the terminals 30. The connector pins 21 are press-fitted to the grooves of connector pieces 33 bent upward from the side portions of the terminals 30 and are spot-welded or soldered to the connector pieces 33.

This ensures reliable contact between each of the terminals 30 and each of the diodes 20. In the conventional junction box, the opposite projections of a dumbbell-shaped diode are press-fitted and fixed to a clip spring of a terminal. This makes the contact unstable and reduces the contact performance.

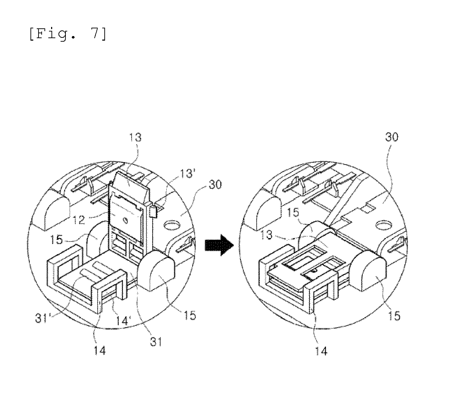

As shown in Fig. 7, each of the terminals 30 includes a tip end portion 31 to which the ribbon wire (not shown) of the solar cell is connected and a plurality of embossments 31' protruding from the tip end portion 31. A spring holder 13 provided with a contact spring 12 making contact with the embossments 31' is rotatably coupled to a hinge shaft 15 provided in the housing 10 and is locked to a fastener member 14 provided in the housing 10. This makes it possible to strongly fix a ribbon wire (not shown) existing between the embossments 31' and the contact spring 12.

The spring holder 13 includes an insertion lug 13' formed on the side surface thereof. The insertion lug 13' is inserted into and fixed to a locking groove 14' of the fastener member 14. Accordingly, as compared with the conventional junction box in which a ribbon wire is fixed only by the elasticity of a contact spring, it is possible to significantly increase the contact force acting between each of the terminals 30 and the ribbon wire.

Preferably, a plating layer made of silver or tin is formed on the tip end portion 31 of each of the terminals 30 in an effort to reduce the contact resistance between the tip end portion 31 and the ribbon wire. The plating layer is formed at such a width as to cover the embossments 31'.

The plating layer may preferably contain gold. This makes it possible to prevent rust generation or oxidation caused by tin plating or silver plating and to significantly enhance the durability of the junction box.

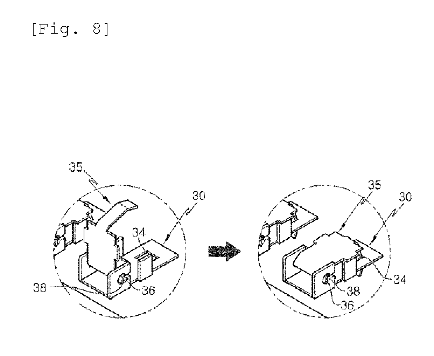

Fig. 8 shows another example of the ribbon wire fastener in which the ribbon wire is fixed through the use of a fixing member including a clip 35. As shown in Fig. 8, the clip 35 includes a clip lug 36 rotatably fitted to a pivot hole 38 of the fixing member and a clip hook 37 locked to a clip locking portion 34 of the fixing member. The ribbon wire can be easily and strongly fixed by placing the ribbon wire on the tip end portion 31 of each of the terminals 30, rotating the clip 35 and locking the clip hook 37 to the clip locking portion 34.

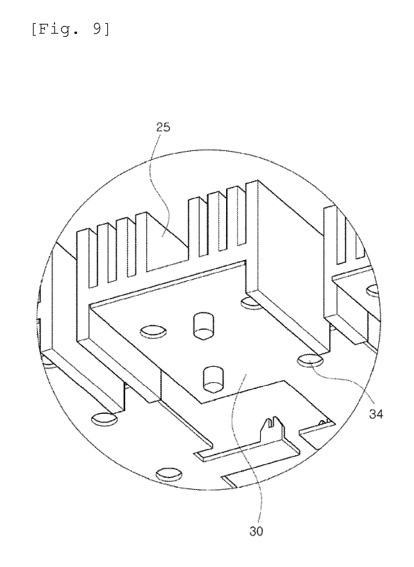

As shown in Fig. 9, the bottom regions of the housing 10 corresponding to the heat sinks 25 are opened so that the rear portions of the terminals 30 and the heat sinks 25 can be exposed to the outside. Each of the terminals 30 has a plurality of heat radiating holes 34. This makes it possible to enhance the heat radiating efficiency of the heat sinks 25 and to rapidly dissipate the heat generated in the terminals 30.

Description will now be made on a process of assembling the solar cell module junction box configured as above.

The terminals 30 are positioned within the housing 10 at a specified interval and, then, the diodes 20 are installed in the connecting portions between the terminals 30. At this time, the two connector pins 21 of each of the diodes 20 are connected to the connector pieces 33 of the terminals 30.

The diodes 20 are installed in the connecting portions between the terminals 30. The heat sinks 25 corresponding to the diodes 20 are arranged at the rear sides of the terminals 30 to dissipate the heat generated in the diodes 20.

In the event that, instead of the heat sinks 25, the heat diffusion pads are used in order to dissipate the heat generated in the diodes 20, the opposite ends of the terminals 30 are interconnected by the insulating heat diffusion members 29 made of a heat diffusion material or a heat diffusion pad covering the heat diffusion material. Thus the heat generated in the diodes 20 can be dissipated through the terminals 30.

The positive and negative cable members 60 are connected to the two terminals 30 spaced apart from each other in the transverse direction of the housing 10. The cable wires 61 of the cable members 60 are fixed by means of the wire nuts 62. In other words, the wire nuts 62, the wire seals 63 and the wire seal holders 65 are fitted to the cable wires 61. The cable wires 61 are inserted into the cable insertion portions 66. The cable wires 61 and the terminals 30 are connected to each other by tightening the wire nuts 62.

If the wire nuts 62 are tightened in a state that the cable wires 61 are inserted into the cable insertion portions 66, the wire seals 63 fitted to the wire seal holders 65 are contracted and the cable wires 61 are compressed. This makes it possible to prevent water or contaminants from infiltrating into the cable insertion region. This also makes it possible to use cables differing in thickness.

The connection of the cable wires 61 to the terminals 30 is finished by inserting the end portions of the cable wires 61 into the insertion portions 32 of the terminals 30 and crushing the insertion portions 32.

Thereafter, the ribbon wires of the solar cells are fastened to the tip end portions 31 of the terminals 30. In other words, the ribbon wires are placed on the tip end portions 31 of the terminals 30. In this state, the spring holders 13 are rotated and locked to the fastener members 14.

Then, the contact springs 12 of the spring holders 13 are pressed against the embossments 31' of the tip end portions 31 of the terminals 30 with the ribbon wires interposed between the contact springs 12 and the embossments 31'. Consequently, the ribbon wires are strongly fastened to the tip end portions 31 of the terminals 30.

In another example of the ribbon wire fastener, the ribbon wires are placed on the tip end portions 31 of the terminals 30. The clips 35 are rotated and locked to the clip locking portions 34, thereby fastening the ribbon wires to the terminals 30.

Once the junction box is connected to the solar cells, the cover 50 is coupled to the upper portion of the housing 10 with the gasket 55 interposed therebetween. At this time, the membrane 41 as the water-proof dehumidifying means 40 is installed in the installation portion 51 formed in the bottom portion of the cover 50. This makes it possible to remove the moistures existing within the housing 10 while preventing water or contaminants from infiltrating into the housing 10.

The solar cell module junction box assembled through the aforementioned process serves to collect the electric power generated in the solar cells and to deliver the collected electric power to an inverter or a battery.

The electric power generated in the solar cells is fed to the battery or the inverter via the terminals 30 and the cable members 60. Thus there is available a loop circuit formed of the solar cells, the junction box, the cable members 60, the solar cells, the junction box, the cable members 60 and the solar cells.

Each of the diodes 20 interconnects the terminals 30 and causes an electric current to bypass a solar cell having trouble. In this process, heat is generated in the diodes 20 and is dissipated through the terminals 30 and the heat sinks 25 arranged at the rear sides of the terminals 30 or the insulating heat diffusion member 29 made of an insulating heat diffusion material.

This makes it possible to prevent reduction in the performance of the diodes 20 which may be caused by overheating. Accordingly, it is possible to maintain the performance of the diodes 20 for a long period of time and to prolong the lifespan of the diodes 20 and the solar cell module.

While one preferred embodiment of the invention has been described hereinabove, the present invention is not limited thereto. It is to be understood that various changes and modifications may be made without departing from the scope of the invention defined in the claims.

## Claims

1. A solar cell module junction box, comprising:
a plurality of terminals (30) respectively connected to solar cells;
a housing (10) one-piece formed with the terminals (30);
a cover (50) coupled to an upper portion of the housing (10) to close the housing (10);
a pair of cable members (60) respectively connected to the terminals (30) spaced apart from each other along a transverse direction of the housing (10);
a flat diode (20) arranged between the terminals (30) and configured to cause an electric current to bypass a damaged solar cell; and
a plurality of heat sinks (25) arranged at the rear side of the diode (20) to dissipate heat generated in the diode (20) or a heat diffusion member (29) made of an insulating heat diffusion material (29a) alone or formed by covering a heat diffusion pad (29b) with the insulating heat diffusion material (29a),
each of the terminals (30) including a tip end portion (31) to which a ribbon wire of each of the solar cells is connected and a fixing member having a clip (35) arranged in the tip end portion (31), the clip (35) including a clip lug (36) rotatably fitted to a pivot hole (38) of the fixing member and a clip hook (37) formed at a tip end of the clip (35) and locked to a clip locking portion (34) of the fixing member, the clip (35) configured to fix the ribbon wire interposed between the tip end portion (31) of each of the terminals (30) and the clip (35).

2. The junction box of claim 1, wherein the diode (20) is soldered to the housing (10) or fastened to the housing (10) by a screw (23), the heat sinks (25) fastened to rear surfaces of the terminals (30) by screws (26) and isolated from each other by a partition wall (11) existing between the heat sinks (25).

3. The junction box of claim 1, wherein the heat diffusion member (29) is installed on upper or lower surfaces of rear end portions of the terminals (30) to interconnect the rear end portions of the terminals (30), the heat diffusion member (29) configured to enable the terminals (30) to dissipate heat generated in the diode (20).

4. The junction box of claim 1, wherein each of the cable members (60) includes a cable wire (61) inserted into an insertion portion (32) formed at the rear side of each of the terminals (30), the insertion portion (32) crushed to fix the cable wire (61) in place.

5. The junction box of claim 1, wherein the diode (20) includes two forwardly-protruding connector pins (21) respectively connected to the terminals (30), the connector pins (21) press-fitted to grooves of connector pieces (33) bent upward from side portions of the terminals (30), the connector pins (21) spot-welded or soldered to the connector pieces (33).

6. The junction box of claim 1, wherein each of the terminals (30) includes a plurality of embossments (31') protruding from the tip end portion (31) and a spring holder (13) provided with a contact spring (12) making contact with the embossments (31'), the spring holder (13) rotatably coupled to a hinge shaft (15) provided in the housing (10) and locked to a fastener member (14) provided in the housing (10) such that the ribbon wire is fixed between the embossments (31') and the contact spring (12).

7. The junction box of claim 6, wherein each of the terminals (30) includes a plating layer made of silver or tin and formed on the tip end portion (31) of each of the terminals (30) to reduce a contact resistance between the tip end portion (31) and the ribbon wire, the plating layer formed at such a width as to cover the embossments (31').

8. The junction box of claim 7, wherein the plating layer contains gold so as to prevent rust generation or oxidation in each of the terminals (30) making contact with the ribbon wire.

9. The junction box of claim 1, wherein the housing (10) has a bottom surface region opened such that the rear portions of the terminals (30) and the heat sinks (25) are exposed to the outside, each of the terminals (30) having a plurality of heat radiating holes (34).

10. The junction box of claim 1, wherein a heat transfer pad (27) or heat transfer grease exists between the terminals (30), the diode (20) and the heat sinks (25).

11. The junction box of claim 1, wherein each of the cable members (60) includes a cable wire (61) having an end portion inserted into an insertion portion (32) formed in the rear portion of each of the terminals (30) and pressed against each of the terminals (30), a wire nut (62) fastened to each of cable insertion portions (66) spaced apart from each other in a transverse direction of the housing (10), a wire seal (63) interposed between each of the cable insertion portions (66) and the wire nut (62), and a wire seal holder (65) formed in each of the cable insertion portions (66) to hold the wire seal (63), each of the cable members (60) configured such that the wire seals (63) fitted to the wire seal holders (65) are contracted and the cable wires (61) are compressed when the wire nuts (62) are tightened in a state that the cable wires (61) are inserted into the cable insertion portions (66).
